# EUROPEAN PATENT APPLICATION

(11) **EP 4 741 669 A1**
(43) Date of publication of application: **13.05.2026**
(21) Application number: 24211417.1
(22) Date of filing: 07.11.2024
(51) Int. Cl.: F04F 13/00, B01D 61/02, C02F 1/44

(54) **COMPONENTS FOR SEALING AND SEALING CONCEPT FOR A PRESSURE EXCHANGER**

(71) Applicant: Danfoss A/S, 6430 Nordborg (DK)
(72) Inventor: Hansen, Poul Erik, 6430 Nordborg (DK); Enevoldsen, Georg, 6430 Nordborg (DK); Babu, Achuthan, 6430 Nordborg (DK)
(74) Representative: Keil & Schaafhausen Patentanwälte PartGmbB

(57) **Abstract**

The present invention relates to thrust pad (1) for a port plate (200) configured to be used with a pressure exchanger (1000), e.g. for a sea water reverse osmosis plant. The pressure exchanger (1000) includes a rotatable drum (1001), the port plate (200) with at least a first port orifice (201), and a port flange (100; 400) with at least a first fluid passage (101; 401). The thrust pad (1) is provided to improve a sealing concept of pressure exchangers. It comprises a plate-side surface (9), a flange-side surface (11), and a lateral surface (12). A curved shape of the thrust pad (1) is configured to be arranged at least partially between the port plate (200) and the port flange (100; 400). The thrust pad (1) extends in a thickness direction (Z) less than in a first direction (X) and a second direction (Y), wherein directions (X, Y, Z) are perpendicular. The thrust pad (1) comprises a through hole (2) that is configured to fluidically connect the first port orifice (201) of the port plate (200) to the first fluid passage (101; 401) of the port flange (100; 400). The present invention also relates to a port plate arrangement (250), an assembly of a port plate arrangement (250) and a port flange (100; 400) and to a pressure exchanger (1000).

## Description

The present invention relates to a thrust pad for a port plate configured to be used with a pressure exchanger, for example a pressure exchanger for a sea water reverse osmosis plant. Further, the present invention relates to a port plate arrangement, to an assembly of a port flange and a port plate arrangement, as well as to a pressure exchanger.

Pressure exchangers, such as rotary pressure exchangers, are well-known in the art and used for energy transfer while maintaining hydraulic pressure (isobaric). In simple terms, the pressure exchangers transfer a high-pressure fluid flow into a low-pressure fluid flow.

This general concept of a pressure exchanger is frequently used in reverse osmosis plants, for example in sea water reverse osmosis plants for desalinating of sea water, as energy recovery devices or energy saving devices. In this regard, the pressure exchangers use high-pressure fluid, for example high-pressure fluid expelled from a membrane of the reverse osmosis plant, to pressurize sea water, which is introduced into the pressure exchanger at low pressure, thereby feeding the membrane with sea water at high pressure. Using pressure exchangers as energy recovery devices is particularly helpful in reducing the amount of energy, i.e. in saving energy, that would otherwise be needed by a pump to pressurize the sea water.

Typically, the pressure exchangers are thus integrated into a complex fluid system and fluidically connected to ducts, channels, passages, pipes or the like which transport the fluid under high pressure or the fluid under low pressure to and from the pressure exchangers. Leakages in the fluid system, especially in a transition area between fluid transportation means and, for example a drum of the (rotary) pressure exchanger may cause energy losses. Consequently, pressure exchangers known in the art are provided with a sealing concept to allow high-pressure fluid to enter or exit the pressure exchanger, preferably without leakage, however, typically with limited leakage, which decrease the efficiency of the pressure exchanger.

Thus, to prevent excessive leakage, it is known to arrange sealing elements in the pressure exchanger. However, known sealing concepts often require alternating sealings, i.e. sealing elements or surfaces alternating between the high and low pressure side, have large dimensions, need many parts, are complex, heavy or simply not suitable for high pressures, for example for pressures of more than 60 bar. In particular, handling high pressures that deform sealing surfaces, such as sealing surfaces of a port flange of a pressure exchanger, may pose difficulties.

Consequently, an improved sealing concept for pressure exchangers is required. Therefore, it is the object of the present invention to improve the sealing concept of pressure exchangers. In particular, it is the object of the present invention to provide an improved sealing concept for pressure exchanger that reduces leakage while allowing to operate the system at higher pressures and with higher volume flows.

The object is solved by a thrust pad according to claim 1. Further, the object is solved by a port plate arrangement according to claim 8, by an assembly according to claim 11 as well as by a pressure exchanger according to claim 14.

The thrust pad is for a port plate. The thrust pad is configured to be used with a pressure exchanger, for example a pressure exchanger for a sea water reverse osmosis plant. The pressure exchanger includes a rotatable drum, said port plate and a (corresponding) port flange (an adjacent port flange), wherein the port plate has at least a first orifice and the port flange has at least a first fluid passage.

The thrust pad comprises a plate-side surface, a flange-side surface, and a lateral surface.

The thrust pad comprises a curved shape configured to be arranged at least partially between the port plate and the port flange of the pressure exchanger.

The thrust pad extends in a first direction, a second direction, and a thickness direction, wherein the second direction is defined (at least locally) orthogonal with respect to said first direction and the thickness direction is defined orthogonal with respect to said first direction and said second direction.

The thrust pad extends in the thickness direction less than in the first direction and the second direction, wherein the thrust pad extends in the first direction less than in the second direction.

The thrust pad comprises a through hole.

The through hole is configured to fluidically connect the first port orifice of the port plate to the first fluid port of the (corresponding) port flange.

Each port orifice may provide a flow passage between a flange-side of the port plate and a drum-side of the port plate, respectively.

In more detail, the (corresponding) port flange may include at least two fluid passages. The fluid passages may be for fluid exchange with external elements, e.g. for supplying fluid into the pressure exchanger (towards the drum) and/or for discharging fluid from the pressure exchanger (away from the drum). Each fluid passage may be in fluid connection with or may include a corresponding fluid connector. The fluid connectors are configured for fluidly connecting the port flange (and hence the pressure exchanger) with a fluid circuit.

For example, the at least one port flange may include at least one high-pressure fluid passage and/or at least one low-pressure fluid passage. The at least one high-pressure fluid passage may be the first fluid passage. Especially, the (corresponding) port flange may include exactly one high-pressure fluid passage (e.g. as the "first" fluid passage) and exactly one low-pressure fluid passage.

As noted above, the pressure exchanger comprises (at least) the (corresponding) port plate. The first port orifice thereof may allow fluid to flow therethrough, for example from the (corresponding) port flange via said port plate into the drum of the pressure exchanger and/or vice versa.

The port plate may include at least two port orifices, for example at least one high-pressure port orifice and at least one low-pressure port orifice. The at least one high-pressure port orifice may be the first port orifice. The at least one low-pressure port orifice might be referred to as second port orifice. Especially, the port plate can include exactly one high-pressure port orifice and/or exactly one low-pressure port orifice.

An axial direction (of the drum) and the pressure exchanger may be parallel to an rotational axis of the drum.

The port plate is (configured to be) arranged at an axial end of the drum (e.g. at a first axial end). In operation of the pressure exchanger, the drum rotates relative to the port plate. A drum-interface side of the port plate may be in sliding contact with the corresponding axial end of the drum.

The (corresponding) port flange may include at least two fluid connectors, e.g. at least one high-pressure fluid connector (a first fluid connector) and at least one low-pressure fluid connector (a second fluid connector). Especially, the port flange may include exactly one high-pressure connector and/or exactly one low-pressure connector.

The first port orifice of the port plate, the through hole of the thrust pad, and the first fluid passage of the (corresponding) port flange form part of the same flow path for fluidly connecting the drum, e.g. for supplying fluid to the drum. Said flow path might be referred to as the first flow path.

The thrust pad according to the invention is configured to be used with said port plate (and the corresponding port flange). The thrust pad prevents leakage of fluid flowing between the port plate (in particular the first port orifice of the port plate) and the corresponding port flange (in particular the first fluid passage of the corresponding port flange).

The thrust pad can be manufactured separately from the port plate. This reduces the manufacturing costs. Since the (drum-interface side of) the port plate is in sliding contact with the (adjacent) axial end of the drum, there are high requirement regarding the flatness of a contact portion at the drum-side of the port plate that is in sliding contact with the drum. Furthermore, due to said sliding contact, there are high requirements regarding wear-resistance and friction.

Manufacturing the thrust pad as a separate element helps to simplify the geometry of the port plate and hence to reduce the costs for manufacturing the port plate. The additional costs for manufacturing the thrust pad can be less since the requirements on the material and the resistances are in tendency lower for the thrust pad.

The drum-side of the port plate sealingly abuts the axial end of the drum in sliding contact. A little leakage at this sliding interface can be acceptable. This is an axial sealing (i.e. surfaces that seal against each other sealingly abut along the axial direction). In common pressure exchangers, there is also a second axial sealing between the flange-side of the port plate (i.e. a side of the port plate facing away from the drum) and the corresponding port flange. This second axial sealing is without axial play (i.e. without allowing limited axial movement of the port plate relative to the adjacent port flange). Naturally, the axial sealing between the drum-side of the port plate and the adjacent axial end of the drum is also not suitable for any relative axial movement of the drum relative to the port plate. Therefore, even slight deformations of the corresponding port flange, the port plate, and/or the drum result in comparatively high leakage. Further, any relative axial movements and/or changes in axial forces between these elements are prone to cause comparatively high leakage. This leakage reduces the efficiency of the common pressure exchangers in operation.

The relevant components for the pressure exchanger, in particular the port plate with the thrust pad and/or the (corresponding) port flange, can be configured to allow limited axial movement of (the port plate with) the thrust pad relative to the corresponding port flange. The additional thrust plate allows for limited axial movement of the port plate with respect to the adjacent port flange without substantial leakage from the first flow path. Especially, it allows a lateral sealing and/or a resilient axial sealing of the first flow path (i.e. the flow path through the first port orifice) at the corresponding port flange in a reliable and cost-efficient manner.

Said relative axial movability helps to ensure good/uniform sealing between the port plate and the drum. The port play can easily follow small axial movements and/or distortions. The sealing sliding contact is not impaired. Further, this helps to keep the engagement force between the port plate and the drum in operation more uniform. This results in reduced, more uniform, and more predictable wear. Finally, this allows to ensure a low friction between the drum and the port plate in operation which is beneficial to obtain a good efficiency of the pressure exchanger

in operation. The relevant components for the pressure exchanger can be configured accordingly.

As noted above, any one of the thrust pad, the port plate, and the (corresponding) port flange is configured to be used with/form part of the pressure exchanger, for example an isobaric pressure exchanger. The pressure exchanger may be a pressure exchanger for a sea water reverse osmosis plant.

Actually, the pressure exchanger can include the port plate and the (corresponding) port flange (e.g. a first port plate and an adjacent first port flange) as well as a further port plate (e.g. a second port plate and an adjacent second port flange) and a port flange, which corresponds to (i.e. is adjacent to) the further port plate. The second port plate may be arranged at a second axial end of the drum. The second axial end of the drum is an end of the drum along the axial direction opposite to its first axial end. At least one of the port plates can be equipped with the thrust pad. Especially, both port plates can be equipped with one thrust pad according to the present disclosure.

The first port flange can be at and/or constitute a first axial end portion of the pressure exchanger. Additionally or alternatively, the second port flange can be at and/or constitute a second axial end portion of the pressure exchanger. For example, the first port flange may be configured for connecting the pressure exchanger to a brine section of the reverse osmosis part and the second port flange may be configured for connecting the pressure exchanger with a feed section of the reverse osmosis plant. Accordingly, the first axial end portion of the pressure exchanger may be denoted as "brine-side" and the second axial end portion of the pressure exchanger may be denoted as "feed-side". In these contexts, the terms "first" and "second" are mere nomenclature and might be interchanged.

The flange-side surface (of the thrust pad) may be arranged on an side opposite to the plate-side surface.

The flange-side surface can be configured to face towards the (corresponding) port flange (i.e. the adjacent port flange) when the thrust pad is implemented in the pressure exchanger.

The plate-side surface can be configured to face towards the port plate (and hence towards the drum) when the thrust pad is implemented in the pressure exchanger.

The flange-side surface and the plate-side surface may be opposite sides of the thrust pad along an axial direction of the thrust pad. The axial direction of the thrust pad may be parallel to the axial direction when the thrust pad is implemented in the pressure exchanger.

In general, the term axial direction can be used for the axial direction of the drum, the axial direction of the pressure exchanger, for the axial direction of the thrust pad as such, for an axial direction of the port plate as such, and/or for an axial direction of the port flange(s). According one aspects, all these axial directions may be parallel in the pressure exchanger. Hence, it is not necessary to distinguished between the individual axial directions at all times. It is noted that the axial direction of the thrust can be the same as the thickness direction of the thrust pad.

The plate-side surface (of the thrust pad) may comprise projecting portions projecting from a surface area of the thrust pad. Said projecting portions may project along the thickness direction (the axial direction). For example, the thrust pad may comprise a beam and/or rim at the plate-side surface, especially formed around the through hole. By this, a total area of a contact between the thrust pad and the port plate can be decreased. The axial forces acting between the thrust pad and the port plate are concentrated. This facilitates proper sealing between the thrust pad and the port plate (at a transition from the through hole of the thrust pad to the first port orifice).

The thrust plate may comprise engagement means for limiting (or event preventing) lateral movement of the thrust pad relative to the port plate. Said engagement means might include at least on axially protruding part.

The port plate may comprise corresponding engagement means. For example, said engagement means of the port plate might be an edge at a flange-side of the first port orifice.

Additionally or alternatively, the flange-side surface may be a substantially flat surface. The flange-side surface may be free of any (axially) projecting surface portions.

As noted above, the thrust pad comprises the curved shape configured to be arranged at least partially between the port plate and a port flange of the pressure exchanger. The lateral surface may extend between the flange-side surface and the plate-side surface. A distance between the plate-side surface and the flange-side surface of the thrust pad may be the same for all areas of the thrust pad or may be different, i.e. the distance between the plate-side surface and the flange-side surface may be different in different areas of the thrust pad, for example due to projecting portions. Thus, there may be some areas of the thrust pad in which a distance between the plate-side surface and the flange-side surface is smaller compared to other areas of the thrust pad.

According to one aspect, the thrust pad may be configured for sealing with the port plate. The sealing might prevent fluid leakage at a transition between the through hole and the first port orifice. In other words, the thrust pad may be configured to seal a transition area, for example a transition area or an interface between the port plate and the thrust pad.

When the thrust pad is used with the pressure exchanger, the plate-side surface may be in abutment with the port plate. At least in operation, the thrust pad may be pressed axially against the port-plate towards the drum (e.g. by fluid pressure, by at least one resilient element introduced below, and/or by an elastomeric force of an axial sealing element between the thrust pad and the port flange).

The flange-side surface may be axially supported with respect to the port flange (e.g. via the least one resilient element and/or the elastomeric axial sealing element between the thrust pad and the port flange). However, limited axial movement of the thrust pad (and hence the port plate) with respect to the adjacent port flange may be possible.

The (corresponding) port flange may include a thrust-pad recess for receiving a flange-side portion of the thrust pad. The thrust-pad recess may be arranged at a plate-interface of the port flange that is configured to face the (flange-side) of the port plate with the thrust pad. In particular, the thrust-pad recess may be arranged at an end portion of the first fluid passage at the plate-interface.

Vice versa, the flange-side portion of the thrust pad may be configured to be inserted into the thrust-pad recess.

According to one aspect, the thrust may be configured for sealing with the first fluid passage of the (corresponding) port flange. Especially, the thrust pad may be configured for lateral sealing with the corresponding port flange at the thrust-pad recess.

In particular, the thrust pad may be configured for axial sealing with the port flange (for example at the thrust-pad recess) and/or for lateral sealing with the port flange (for example at the thrust-pad recess).

An additional sealing element, for example, an O-ring may be provided together with the thrust pad. It is also possible that several additional sealing elements are provided together with the thrust pad.

For example, the thrust pad may be provided with a sealing element for axial sealing, e.g. against the (corresponding) port flange, for example at the thrust-pad recess. The sealing element for axial sealing might be referred to as axial sealing element. The axial sealing element may be configured to axially seal against an axial sealing surface of the corresponding port flange. Said axial sealing surface may be arranged in the first fluid passage. According to one embodiment, said axial sealing surface might be a "bottom" of the thrust-pad recess, i.e. wall of the thrust-pad recess opposite to the port plate in the axial direction. An axial length of the thrust-pad recess may be configured to accommodate both the flange-side portion of the thrust pad and the axial sealing element. The axial sealing element may be configured for sealing axial abutment onto the flange-side portion of the thrust pad (and vice versa) one the one hand and for sealing abutment on the axial sealing surface (of the port flange) on the other hand.

The axial sealing element may be suitable for limited axial movement of the thrust pad relative to the corresponding port flange. For example, the axial sealing element can be (at least) axially resilient. The axial sealing element may be configured to take up and/or adapt to said limited axial movement.

Additionally or alternatively, the thrust pad may be provided with a sealing element for lateral sealing, e.g. against the (corresponding) port flange, for example at the thrust-pad recess. The sealing element for lateral sealing might be referred to as lateral sealing element.

The lateral sealing element can be configured to circumferentially surround the flange-side portion of the thrust pad, e.g. in the thrust-pad recess.

The radial sealing element may be configured to be partially received in a circumferential groove of the thrust-pad recess. Additionally or alternatively, the flange-side portion of the thrust pad may include a circumferential groove for partially receiving the lateral sealing element.

Especially, the sealing element for lateral sealing may be configured for (lateral) sealing between the an inner circumferential surface of the thrust-pad recess and an outer circumferential surface of the flange-side portion of the thrust pad (i.e. the part of the thrust pad that protrudes into the thrust-pad recess).

The lateral sealing may be suitable for limited axial movement of the thrust pad relative to the corresponding port flange.

The thrust pad may be usable for force transfer. For example, the thrust pad may allow to transfer an axial force/axial forces (e.g. a axial fluid pressure force towards the drum that acts on the part of the thrust pad protruding into the thrust-pad recess and/or an axial resilient force acting on the thrust pad towards the drum, e.g. applied by the sealing element(s) and/or the at least one resilient element) onto the port plate.

The sealing element(s) provided together with the thrust pad may allow to compensate for deformation of the port flange and/or the port plate occurring due to the hydraulic pressure acting on the fluid system.

As noted above, the thrust pad has a smaller extension in the thickness direction than in the first direction as well as in the second direction. In other words, the extension in the thickness direction is smaller than the extension in the first direction, and the extension in the thickness direction is smaller than in the second direction. The second direction is defined (at least locally) orthogonal with respect to said first direction. The first and second directions may be arranged in a plane. The thickness direction is defined orthogonal with respect to the first direction and the second direction. The thickness direction may thus be a normal direction with respect to the plane spanned by the first direction and the second direction. The extension in relation to the first, second and thickness direction refers to the maximum extension of the thrust pad in the respective direction.

According to one aspect, "curved shape" may mean that the thrust pad may protrude at different positions along the first direction or the second direction to different extents from a plane spanned by the thickness direction and the first direction is or spanned by the thickness direction and the second direction, and wherein the first direction or the second direction run through the thrust pad.

In one aspect, the thickness direction may be at least partially parallel to the lateral surface.

Further, in one aspect regarding the thrust pad, the thickness direction (Z-direction) may define a direction normal with respect to the plate-side surface and/or the flange-side surface. The plate-side surface and/or the flange-side surface may thus extend along the first direction and the second direction.

Further, the flange-side surface may provide a flat surface (e.g. for contact with the axial sealing element).

The plate-side surface may provide a flat contact portion for flat contact (abutment) with the port plate. Said portion can be - as such - completely flat. According to one aspect, the plate-side surface can optionally include the projecting portions and the flat contract portion may be formed on the projection portions.

The thrust pad may be configured such that it remains in abutment with the port plate even if no (fluid) pressure is applied on the thrust pad.

As noted above, the thrust pad comprises the through hole. The through hole may comprise a similar shape as the thrust pad. The through hole may be surrounded by a beam or rim. The through hole may extend along the thickness direction so that a fluid may flow between the flange-side surface and the plate-side surface through the through hole of the thrust pad. The through hole is configured to fluidically connect the first port orifice of the port plate with the first fluid passage of the (corresponding) port flange when the thrust pad is arranged between the port plate and the (corresponding) port flange. The thrust pad may therefore be a fluid-conducting element between the port plate and the corresponding port flange, which enables sealing. The thrust pad may be and/or include a static sealing element.

According to one aspect, the through hole may cover an area of no more than 70 % of the total flange-side surface area and/or no more than 70 % of the total plate-side surface area (compared to the case that the trust pad would not have the through hole). Additionally or alternatively, the through hole covers an area of at least 50 % the flange-side surface (compared to the case that the trust pad would not have the through hole).

Arrangement of the thrust pad, for example, arrangement of the thrust pad at least partially between the port plate and the (corresponding) port flange, may allow to improve sealing of the pressure exchanger. Therefore, the thrust pad may improve the cost versus flow ratio as it allows to decrease the leakage compared to known sealing concepts. Further, when arranged in the pressure exchanger, the thrust pad allows to improve the efficiency of the pressure exchanger with an allowable working flow of more than 70 m³/h, i.e. with an inlet flow and/or output flow of more than 70 m³/h.

Preferably, the thrust pad is used at the first fluid passage being at least one high-pressure fluid passage of the pressure exchanger (e.g. the first fluid passage being a fluid passage in a brine-side port flange for supplying brine with high pressure towards the drum and/or a fluid passage in a feed-side port flange for discharging feed water with high pressure), wherein pressures of 0 bar to 90 bar, for example of 0 bar to 85 bar, act on the thrust pad.

In one embodiment, the thrust pad may comprise a semilunar shape. According to the invention, a "semilunar shape" may comprise a crescent shape or a croissant-like shape. However, a "semilunar shape" according to the invention does not require that the thrust pad is axially symmetrical in relation to an axis. In other words, a "semilunar shape" may also be present if the shape of the thrust pad deviates from an axially symmetrical shape. Still, a substantially symmetrical shape may be preferred as it may facilitate production of the thrust pad.

Further, in one additional or alternative embodiment, the lateral surface of the thrust pad may be provided by an inner curved contour and an outer curved contour extending between a first tip portion and a second tip portion. A radius of curvature of the inner curved contour or the outer curved contour may change along the extension of the respective contour. In one aspect, the radius of curvature of the thrust pad may be adapted to the pressure occurring in a fluid system, i.e. the pressure exchanger. The inner curved contour and the outer curved contour respectively may converge at a first end point and a second end point of the respective tip portions.

In one aspect, the thrust pad may comprise a reniform, i.e. a kidney-shape. The thrust pad may be configured to be arranged on the port plate of a pressure exchanger so that the thrust pad may at least partially circumvent, embrace, and/or surround the rotational axis defining the rotational axis of the drum of the pressure exchanger. The shape of the thrust pad may thus allow to optimize a sealing functionality of the thrust pad with respect to a contact surface of the thrust pad with, for example, the port plate. The thrust pad may thus allow to decrease a diameter and/or a thickness of the port plate, which allows to decrease material, weight and costs of the port plate as well as the respective other components.

Further, in one embodiment, the through hole may extend partially along the curved shape of the thrust pad or the semilunar, curved shape of the thrust pad. Hence, the through hole may extend along the reniform shape of the thrust pad. The through hole may comprise a smaller extension in the first direction than in the second direction. The through hole may thus also comprise a curved shape or a semilunar, curved shape. In addition, the through hole according to the invention, in particular its shape and size relative to the thrust pad, may contribute to a larger area of the drum's (axial) end face pointing in the direction of the port plate being provided with channels, which may reduce the weight of the drum. Further, a number of channels of the drum may be increased, wherein cross-sections of the channel may be reduced which avoids cavitation even when the respective drum is used at high pressures.

According to one aspect, the through hole of the thrust pad may comprise the reniform shape. In other words, the through hole may comprise a kidney shape. In one aspect, the thrust pad may comprise a semilunar curved shape, wherein the thrust pad comprises a through hole with a reniform shape. The shape of the through hole of the thrust pad may allow to use a trapezoid shape for channels in the drum of the pressure exchanger, while at the same time providing sufficient sealing at high pressures of more than 60 bar. The use of channel in the drum with cross-sectional shapes other than circular may allow to reduce noise.

In one embodiment, the thrust pad may comprise at least one resilient element which may be arranged on the flange-side surface of the thrust pad and configured to be compressed along the thickness direction (the axial direction).

The (at least one) resilient element may be configured to be resiliently compressed in the axial direction between the thrust pad and the (corresponding) port flange (e.g. by the limited axial movement).

The resilient element may, for example, be a spring element. Further, the at least one resilient element may be configured to abut against the corresponding port flange when the thrust pad is arranged between the port flange and the corresponding port plate. When the thrust pad is arranged between the port flange and the corresponding port plate, the resilient element may apply a spring force of about 70 N. The thrust pad may have a recess, a blind hole, a receptacle or similar that may accommodate the resilient element. The resilient element may prevent the thrust pad from displacing relative to the port flange or port plate, especially relative to the port plate, after the thrust pad has been arranged between the respective components. During use of the fluid system, for example the pressure exchanger, the hydraulic pressure is typically sufficient to keep the thrust pad in position with respect to the port plate. The at least one resilient element may thus improve arrangement of the thrust pad as a separate component with respect to the port plate. Providing the thrust pad as a separate component with respect to the port plate may allow to optimize the flatness of the port plate.

In one aspect, the thrust pad may comprise at least two resilient elements, for example exactly two resilient elements. A first one of the resilient elements may be arranged in between one of the tip portions and the through hole. A second one of the resilient elements may be arranged in between the other one of the tip portions and the through hole. However, if no resilient element is used, the thrust pad may also be held in position by the hydraulic pressure acting on the thrust pad.

In a further embodiment, the thrust pad may comprise a thickness defined by an extension of the thrust pad along the thickness direction, wherein the thickness may at least be 10 times smaller than the extension of the thrust pad in the first direction and/or the second direction. In other words, when the thrust pad comprises a thickness of about 9 mm, the thrust pad may comprise an extension in the first direction and/or in the second direction of more than 90 mm. Further, in one embodiment, the thrust pad may comprise a thickness of less than 10 mm. The dimensions of the thrust pad allow to improve the sealing when used under high pressures.

Further, the thrust pad may be provided by a composite material comprising polyether ether ketone (PEEK). In one aspect, the thrust pad may be provided by PEEK reinforced with carbon fibers, preferably with long carbon fibers. In this regard, for example carbon fiber mats may be arranged, for example in layers, inside the PEEK. The material, especially in combination with the shape, may thus allow to provide a thrust pad that allows sufficient deformation while maintaining adequate rigidity. However, according to an alternative aspect, the thrust pad may also be made of PEEK CA30 or Super Duplex stainless steel.

The object of the invention is also solved by a port plate arrangement for a pressure exchanger, for example for a pressure exchanger for a sea water reverse osmosis plant. The pressure exchanger includes a rotatable drum and a port flange (at least one port flange), wherein said (at least one) port flange has (at least) a first fluid passage.

The port plate arrangement has a port plate that extends along a longitudinal axis between a flange-side of the port plate and a drum-side of the port plate opposite to said flange-side of the port plate. In other words, the flange-side and the drum-side of the port plate can be opposite sides of the port plate along the axial direction / along the longitudinal axis.

In one aspect, the port plate may be of substantially cylindrical shape.

The port plate (and accordingly the port plate arrangement) may be configured to be arranged between the corresponding port flange (the adjacent port flange) and the drum. When the pressure exchanger is in use, the port plate may not be rotating relative to the port flange. The thrust pad being arranged between the port plate and the adjacent port flange does not rotate relative to the port flange either. However, the drum may be rotating with respect to the port plate. A surface contact provided between the port plate, in particular between the drum-side of the port plate, and the drum may provide a sliding seal.

The port plate further comprises a first port orifice and a second port orifice extending between the flange-side and the drum-side of the port plate. The port orifices allow separate fluid flows from the flange-side to the drum-side of the port plate. In other words, fluid may pass independently through the first port orifice and the second port orifice, for example from the port flange to the drum, or to the port flange from the drum. Thus, fluid comprising a high pressure may pass through the first port orifice, wherein fluid comprising a low pressure may pass through the second port orifice. The first port orifice and/or the second port orifice may extend at least substantially in the axial direction / parallel to the longitudinal axis. In one embodiment, the first port orifice and/or the second port orifice do not overlap the longitudinal axis in a cross-section perpendicular to the longitudinal axis.

The port plate includes the thrust pad according to any one of the embodiments disclosed.

The descriptions of the embodiments, possible modifications, and advantages with regard to the thrust pad apply accordingly with respect to the port plate (and vice versa).

The thrust pad can be formed integrally with the port plate.

The thrust pad can be mountable to the port plate. The port plate can be provided with the thrust pad being not mounted to the port plate or with the thrust pad being already mounted to the port plate.

The thrust pad can be detachably mountable (especially it can be detachably mounted) to the port plate. The thrust pad can be non-detachably mountable (especially it can be non-detachably mounted) to the port plate.

Manufacturing the thrust pad as such separately from the port plate and mounting it (detachably or non-detachably) to the (main body) of the port plate facilitates manufacturing of the (main body) of the port plate.

The thrust pad may be arranged (or at least arrangeable) on the flange-side of the port plate, especially such that the first port orifice is, at the flange-side, surrounded by material portions of the thrust pad. Fluid may flow into the first port orifice through the through hole. In other words, the through hole and the first port orifice are configured to constitute a fluid connection between the first fluid passage of the corresponding port flange (the adjacent port flange) and the drum, in more detail with a section of the axial end of the drum facing the port plate that presently overlaps with an opening of the first port orifice at the drum-side of the port plate. Said section naturally changes depending of a rotational position of the drum relative to the port plate.

In still other words, the first port orifice is configured to be fluidically connected to the port flange (more specifically to the first fluid passage of the port flange) by the through hole of the thrust pad. Fluid may flow via the first port orifice through the through hole into the port flange or vice versa. The port plate may thus allow for a simple structure, while still be especially suitable for pressure exchangers operating at high pressures.

No thrust pad may be required for the second port orifice, i.e. the port of the low-pressure side. In other words, the port plate arrangement may include only one single thrust pad for the given port plate. In still other words, the second port orifice of the port plate may be free of any thrust pad.

In one embodiment, the port plate may comprise polyether ether ketone (PEEK). For example, the port plate may be made of PEEK CA30. In this regard, the port plate may for example be injection molded. In one aspect, the port plate may be provided by a composite material comprising PEEK reinforced with carbon fibers, preferably with long carbon fibers. The improved sealing concept may thus allow to use a port plate which is less complicated to produce as only a single material is required and therefore less expensive while still allowing to seal sufficiently at high pressures.

In one embodiment, the port plate play may comprise steel, e.g. stainless steel. For example, the port plate can have a steel core, e.g. a stainless steel core, that is at least partially provided (e.g. overmolded) with PEEK (maybe with additional fibers such as carbon fibers).

The port plate may be manufactured (e.g. molded) together with the thrust pad so that the thrust pad forms an integral part of the port plate.

In general, the port plate and the thrust pad can be made of the same material or of different materials.

The thrust pad may comprise a same material component as the port plate. For example, the port plate and the thrust pad may both comprise PEEK. The port plate and the thrust pad may thus be molded as one component.

Moreover, the object of the present invention is also solved by an assembly including a port flange for a pressure exchanger and the thrust pad according to any one of the embodiments disclosed. Especially, the object is solved by an assembly of the port plate arrangement according to the present invention and an adjacent port flange (a corresponding port flange).

The port flange includes:
a plate-interface for facing the flange-side of the port plate with the thrust pad,
the first fluid passage, wherein the first fluid passage opens towards the port plate at the plate-interface,
a thrust-pad recess surrounding the first fluid passage at the plate-interface;
wherein the flange-side of the port plate with the thrust pad faces the plate-interface of the port flange, and wherein a flange-side portion the thrust pad is received in the thrust-pad recess of the port flange.

The flange-side portion of the thrust pad may be received in the thrust-pad recess with limited axial displaceability (i.e. with limited axial movement of the flange-side portion with respect to the thrust-pad recess being allowed). Accordingly, an axial length of the flange-side portion that is received within the thrust-pad recess may be variable in accordance with the axial displaceability, i.e. slightly differ in operation depending on the present relative axial position of the thrust pad with respect to the port flange.

The thickness direction of the thrust pad and the longitudinal axis of the port plate may be parallel. Additionally or alternatively, an axial direction of the adjacent port flange may be parallel to the longitudinal axis of the port plate. The axial direction of the adjacent port flange may be parallel to the rotational axis of the drum.

The thrust-pad recess may be adapted to the shape of the (flange-side portion of the) thrust pad. Especially, a cross-sectional shape of the thrust-pad recess perpendicular to the axial direction may be adapted to the cross-sectional shape of the flange-side portion of the thrust pad perpendicular to the axial direction. In one embodiment, the thrust pad may be fully receivable in the first recess. As noted above, the thrust pad can be an integral part of the port plate in some embodiments.

According to one aspect, the assembly includes a sealing element for sealing between the thrust pad, maybe especially the flange-side portion of the thrust-pad, and the (corresponding) port flange, maybe especially the thrust-pad recess thereof.

For example, the assembly can include a lateral sealing element for lateral sealing between the flange-side portion of the thrust pad and the thrust-pad recess.

The thrust-pad recess and/or the flange-side portion of the thrust pad can include a circumferential recess for receiving the lateral sealing element. For example, a circumferential groove may extend on an inner circumferential surface of the thrust-pad recess. Said groove may extend orthogonally to the axial direction.

The lateral sealing element may be an O-ring. When the flange-side end portion of the thrust pad is received within the first recess, the lateral sealing element may be configured to abut a circumferential surface of the flange-side end portion of the thrust pad, e.g. an outer circumferential surface thereof. Especially, the lateral sealing element abuts the contours, the inner curved contour and the outer curved contour, of the thrust pad. When the thrust pad is inserted into the thrust-pad recess and the lateral sealing element is in contact with the thrust pad, the thrust pad may be secured in the thrust-pad recess by a frictional force resulting from a surface contact between the lateral sealing element and the thrust pad. This facilitates manufacturing, maintenance, and repair. The lateral sealing element may contribute to the sealing of the thrust pad and may additionally prevent a flow of fluid past the contours of the thrust pad.

As noted above, the (corresponding) port flange may include the second fluid passage.

In one embodiment, the (corresponding) port flange may comprise a second recess surrounding the second fluid passage at the plate-interface (can be referred to as circumventing recess). The circumventing recess may thus be on the same side of the port flange (in the axial direction) as the thrust-pad recess surrounding the first fluid passage at the plate-interface.

The second recess may comprise a reniform, i.e. a kidney-shape. The circumventing recess may be configured to at least partially receive a corresponding circumventing protrusion of the port plate, the circumventing protrusion surrounding the second port orifice at the flange-side. Said circumventing protrusion might be provided by a sealing element at the port plate.

The circumventing recess and/or the circumventing protrusion may be configured to receive a sealing element (which may be referred to as circumventing sealing element). The circumventing sealing element may be an O-ring. The O-ring may comprise no longer comprise an O-shape when mounted. The circumventing sealing element may contribute to a sealing between the second fluid passage and the second port orifice. Accordingly, the circumventing sealing element may contribute to the sealing at the low-pressure side.

The assembly may allow limited axial movement of the port plate with respect to the port flange, for example limited movement along the longitudinal axis of the port plate towards the port flange. Therefore, (high) hydraulic pressures acting on the thrust pad and leading to deformation of the port flange may be compensated for. In operation, the drum may be rotating with respect to the port plate. A force acting on the sliding seal between the drum and the port plate may substantially be directed along the axial direction (and hence towards the port flange). Further, a force acting on the thrust pad in an opposite direction as the force acting on the drum-side of the port plate is transferred by the thrust pad onto the flange-side of the port plate. This force acting on the thrust pad may keep the fluid system closed, at least between the thrust pad and the port plate and/or between the port plate and the axial end of the drum (with respect to unintended "lateral" leakage, i.e. out of the first flow path from the first fluid passage until the channel(s) overlapping with the first port orifice). The thrust pad may seal against the port flange.

Even further, the object of the present invention is solved by a pressure exchanger, in particular a rotary pressure exchanger, according to claim 14.

The pressure exchanger may have an inlet flow or an output flow of more than 70 m³/h. In one embodiment, the inlet flow or output flow of the pressure exchanger may be between 70 m³/h and 140 m³/h. In a further aspect, however, the inlet flow or output flow of the pressure exchanger may also be greater than 140 m³/h. The pressure exchanger extends along a rotational axis. Further, the pressure exchanger comprises two assemblies according to the aforementioned aspects of the description, i.e. two assemblies each comprising a port plate, a port flange, and a thrust pad. The pressure exchanger also comprises a drum with channels, which may be considered as working cylinders. When the pressure exchanger is in use, the drum may rotate about the rotational axis and with respect to the port plate as well as the port flange, wherein the channels may be alternately partially filled with fluid at low pressure or at high pressure dependent on the rotational position of the drum. The port plates and the port flanges are not rotating and are therefore rotationally constrained with respect a housing of the pressure exchanger.

Further, the two assemblies of the pressure exchanger are arranged in opposite orientations, wherein the drum is arranged between the two assemblies. In addition, the drum is arranged on the respective drum-side of the port plates, i.e. between the drum-sides of the port plates of each assembly. Furthermore, the rotational axis runs parallel to the longitudinal axes of the port plates. In one aspect, the rotational axis may in line with the longitudinal axes of the port plates.

The channels of the drum extend parallel to the rotational axis. In one aspect, the channels of the drum may extend parallel to the rotational axis and therefore parallel to the longitudinal axes of the port plates. Further, and as mentioned above, the drum is rotatable about the rotational axis relative to the port plates. The channels are configured to be fluidically connected to the port orifices of the port plates, i.e. the first port orifice and the second port orifice of the respective port plate, depending on the rotational position of the drum.

By not rotating the respective port plate during operation of the pressure exchanger, with the thrust pad positioned on the flange-side of the port plate facing away from the drum, the thrust pad forms a static seal that allows a reliable seal even at high pressures. In addition, the thrust pad is configured to transfer force onto the port plate. Further, the sealing concept according to the aforementioned aspect does not require to use dynamic seals, i.e. no sealing elements which alternate between high pressure and low pressure. In other words, the pressure exchanger may only comprise sealing elements which are constantly provided on the high-pressure side or the low-pressure side and as such only influenced by fluid comprising high pressure or low pressure. At the same time, for example, a valve plate as typically used with pressure exchangers known in the art, may not be required, which reduces the weight of the pressure exchanger according to the invention. The new sealing concept may thus allow to reduce the weight of the pressure exchanger by a factor of around two while maintaining or improving efficiency of the pressure exchanger.

In one embodiment, and with respect to the aforementioned description, the pressure exchanger may comprise a high-pressure side and a low-pressure side. Further, the pressure exchanger may be configured to allow fluid comprising a high pressure to pass from one of the port flanges through the through hole of the thrust pad, through the first port orifice of the port plate and into one of the channels (e.g. which presently overlaps with the first port orifice), for example into one of the working cylinders, of the drum. The aforementioned mode of operation thus allows to discharge a fluid taken up on the low-pressure side into a channel of the drum, i.e. a fluid which has initially a low pressure, on the high-pressure side out of the channel under high pressure by high-pressure fluid introduced on the high-pressure side (opposite to the side of the drum from which the low-pressure fluid was initially introduced) into the channel of the drum displacing the initial low-pressure fluid. In this regard, the fluid comprising high pressure when displaced thus flows through the through hole of the thrust pad into the port flange. Consequently, the invention allows to provide a rotary pressure exchanger which is especially suitable to be operated at high pressures.

The inventive sealing concept for a pressure exchanger that is made possible in particular by the provision of the thrust pad according to the invention, may thus allow for multiple improvements, which in particular enable a more economical construction of a pressure exchanger.

Although not described in more detail, a similar sealing concept of providing a thrust pad between the port plate and the port flange may also be used for a hydraulic axial piston machine.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: shows a longitudinal cross-sectional view of an isobaric rotary pressure exchanger according to an embodiment of the present invention comprising a port plate with a thrust pad adjacent to a brine-side port flange and a further port plate with a thrust pad adjacent to a feed-side port flange and a drum being rotatably arranged between the two port flanges;
- Fig. 2: shows an axial view onto an axial end of the pressure exchanger of Fig. 1 with the feed-side port flange;
- Fig. 3: shows a perspective view a thrust pad according to an embodiment of the invention that is used in the pressure exchanger of Figs. 1 and 2;
- Fig. 4: shows an axial view on a plate-side surface of the thrust pad of Fig. 3;
- Fig. 5: shows a side view (a lateral view) of the thrust pad of Fig. 3;
- Fig. 6: shows a sectional view of section F-F marked in Fig. 4;
- Fig. 7: shows a sectional view of section G-G marked in Fig. 4;
- Fig. 8: shows a perspective view onto a flange-side of a port plate arrangement according to an embodiment of the invention that is used in the pressure exchanger of Figs. 1 and 2;
- Fig. 9: shows a side view (a lateral view) of the port plate arrangement of Fig. 8;
- Fig. 10: shows an axial view onto the flange-side of the port plate arrangement of Fig. 8;
- Fig. 11: shows a perspective view of the brine-side port flange of the pressure exchanger of Figs. 1 and 2;
- Fig. 12: shows an axial view of an outer side of the port flange of Fig. 11;
- Fig. 13: shows a side view (lateral view) of the port flange of Fig. 11;
- Fig. 14: shows an axial view of the port flange of Fig. 11, more exactly on an inner side with a plate-interface for facing the flange-side of the port plate of Figs. 8 to 10;
- Fig. 15: shows a further side view of the port flange of Fig. 11,
- Fig. 16: shows a sectional view of section A-A marked in Fig. 14;
- Fig. 17: shows a sectional view of section B-B marked in Fig. 14;
- Fig. 18: shows a sectional view of section C-C marked in Fig. 14;
- Fig. 19: shows a sectional view of section D-D marked in Fig. 12;
- Fig. 20: shows a sectional view of section E-E marked in Fig. 14;
- Fig. 21: shows a magnified section A of Fig. 1; and
- Fig. 22: shows a magnified section B of Fig. 21.

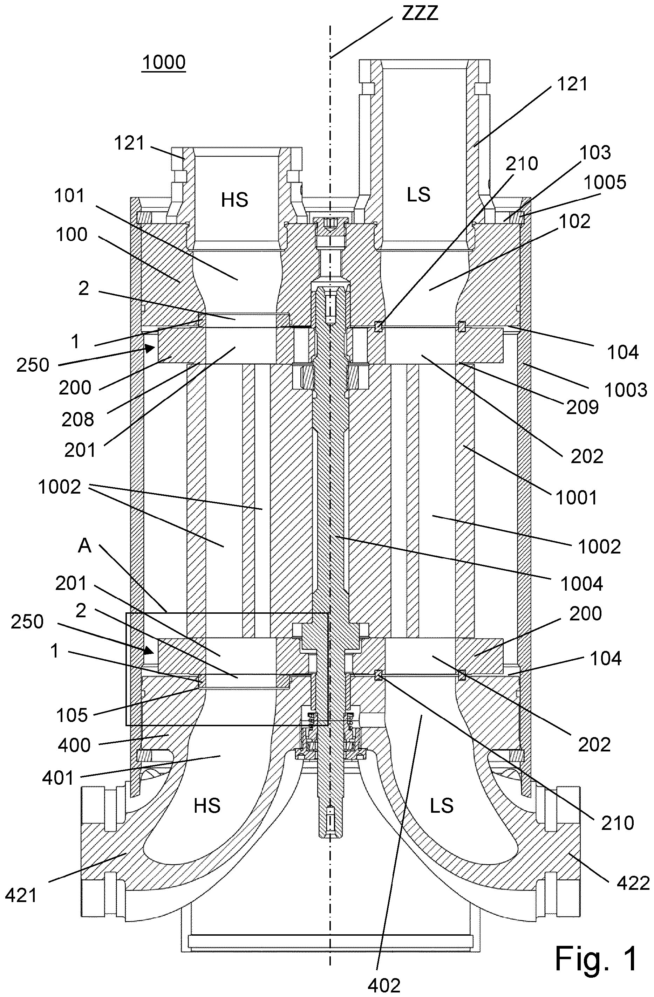

Fig. 1 shows an isobaric pressure exchanger 1000. It is suitable for use in a sea water reverse osmosis plant for desalinating of sea water.

The pressure exchanger 1000 includes a drum 1001 that is rotatable around a rotational axis ZZZ. An axial direction is parallel to the rotational axis ZZZ.

The drum 1001 includes a plurality of fluid channels 1002 that extend parallel to an axial direction between two axial ends of the drum 1001.

The pressure exchanger 1000 includes a housing with a circumferential housing part 1003 and two port flanges 100, 400 that are arranged at axial end portions of the circumferential housing part 1003. Just for example, the port flange 100 may be used as brine-side port flange and the port flange 400 may be used as feed-side port flange.

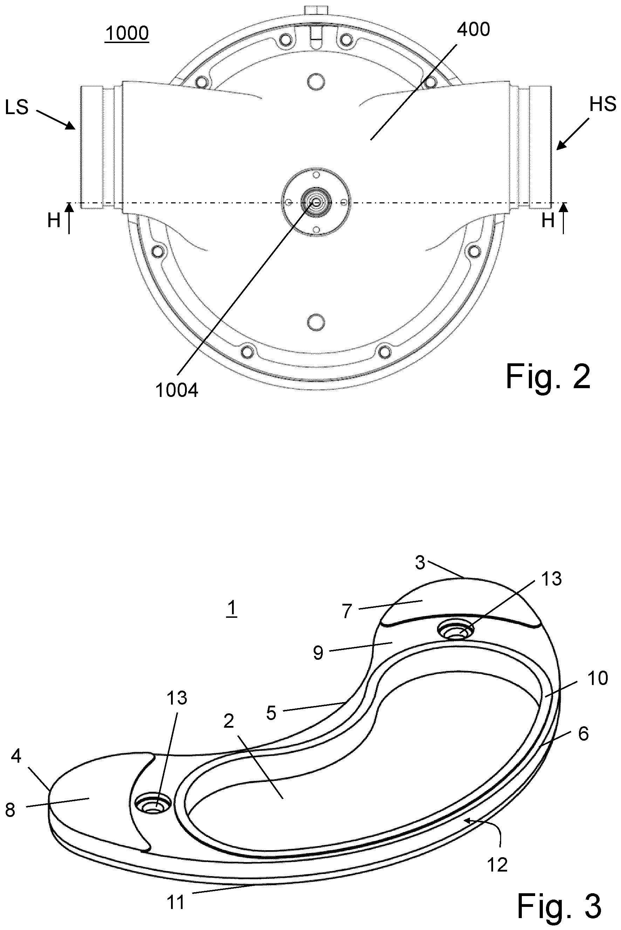

Fig. 2 shows an axial view onto the pressure exchanger 1000, in more detail on the (e.g. feed-side) port flange 400. It is noted that Fig. 1 corresponds to cross-sectional view H-H indicated in Fig. 2.

At each of the two axial ends of the drum 1001, the pressure exchanger 1000 includes a port plate arrangement 250, respectively. The port plate arrangements 250 are identical in this exemplary embodiment.

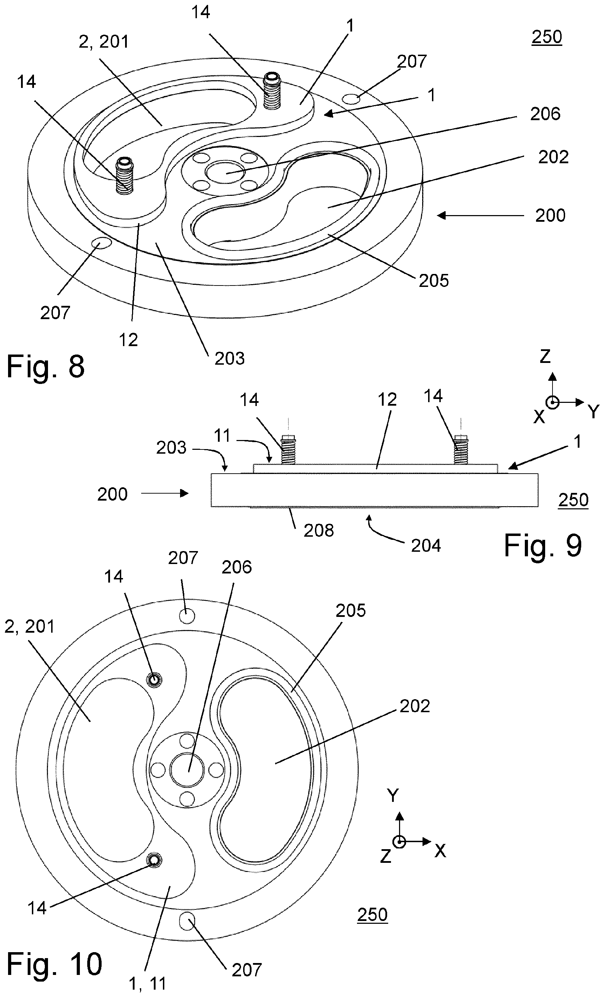

An example of the port plate arrangements 250 is shown in Figs. 8 to 10. It includes a port plate 200 and a thrust pad 1 arranged at the port plate 200. The thrust pad 1 is provided on a flange-side 203 of the port plate 200.

The two port plate arrangements 250 in Fig. 1 at the opposite axial ends of the rotatable drum 1001 are oriented upside-down with regard to each other. In more detail, a drum-side 204 of the respective port plate 200 faces the corresponding (the adjacent) port flange 100, 400 and a flange-side 203 of the port plate 200 faces the adjacent axial end of the drum 1001.

With regard to the individual port plate 200, its drum-side 204 is in sliding sealing engagement with the adjacent axial end of the drum 1001. Naturally, some small leakage of fluid between the axial ends of the drum 1001 and the drum-sides 204 is tolerable.

The drum 1001 is mounted on a rotary shaft 1004. The rotary shaft 1004 extends along the rotational axis ZZZ. It is rotatably mounted in the port flanges 100, 400 and/or in the port plates 200 and can be driven externally for rotating the drum 1001 with respect to the housing (including the port flanges 100, 400 and the circumferential housing part 1003) and the port plate arrangements 250.

The port flanges 100, 400 include fluid connectors 121, 122, 421, 422 for connecting the pressure exchanger 1000 with a fluid circuit (not shown).

The brine-side port flange 100 includes a first fluid connector 121 that is fluidly connected to a first fluid passage 101 of the brine-side port flange 100 and a second fluid connector 122 that is fluidly connected to a second fluid passage 102 of the brine-side port flange 100. In this exemplary embodiment, the fluid connecters 121, 122 can be fixed to the brine-side port flange 100 in a detachable manner.

The feed-side port flange 400 includes a first fluid connector 421 that is fluidly connected to a first fluid passage 401 of the feed-side port flange 400 and a second fluid connector 422 that is fluidly connected to a second fluid passage 402 of the feed-side port flange 400. In this exemplary embodiment, the fluid connecters 421, 422 can are formed integrally with the (rest of) the feed-side port flange 400.

The first fluid passages 101, 401 of the port flanges 100, 400 are high-pressure fluid passages. In operation of the pressure exchanger 1000, they are subjected to comparatively high pressure. They are arranged at a high-pressure side HS of the pressure exchanger 100.

The second fluid passages 102, 402 of the port flanges 100, 400 are low-pressure fluid passage. They are typically subjected to lower pressure in operation. They are arranged on a low-pressure side LS of the pressure exchanger 1000.

The respective port plate 200 includes one first port orifice 201 and one second port orifice 202. The first port orifice 201 is used as high-pressure orifice. It is fluidly connected to the high-pressure fluid passage 101, 401 of the adjacent port flange 100, 400. The first port orifice 201 is located at the high-pressure side HS. The second port orifice 202 is used as low-pressure orifice. It is fluid connected to the low-pressure fluid passage 102, 402 of the adjacent port flange 100, 400. The second port orifice 202 is located at the low pressure side LS.

In the individual port plate arrangement 250, the thrust pad 1 is arranged at the flange-side 203 of the port plate 200 around the first orifice 201. The thrust pad 1 contributes to sealing between the first port orifice 201 and the first fluid passage 101, 401 of the adjacent port flange 100, 400. This will be explained in more detail below.

The port flanges 100, 400 can be axially secured to the circumferential housing section 1004 by a securing ring 1005, respectively.

It is noted that plate-interfaces at inner sides 104 of the port flanges 100, 400 are identical in this embodiment. Consequently, when it is referred to the port flange 100, the corresponding features may likewise be identified for the port flange 400 and vice versa. Apart from the similarities, the port flanges 100, 400 differ mainly with regard to the port connectors 121, 122, 421, 422 and with regard to mountings for the rotary shaft 1004.

The pressure exchanger 1000 basically works as follows: Brine fluid with high pressure enters through the (first fluid connector 121 into the fluid passage 101 of the brine-side port flange 100. The high-pressure brine fluid further flows to a through hole 2 of the thrust pad 1 and the first port orifice 201 of the port plate 200 (which is adjacent to the brine-side port flange 100) into at least one of the channels 1002 that presently overlaps - depending on a rotational position of the drum 1001 - with said first port orifice 101. At this time, said channel 1002 includes feed fluid (e.g. fresh sea water) to be supplied to the osmosis plant. At the same time, an opposite axial end of the same channel 1002 overlaps with the first port orifice 401 of the port plate 200 adjacent to the feed-side flange 400. Hence the same channel 1002 is also, via the through hole 2 of the thrust pad 1 and the first port orifice 201 of the port plate 200 at the feed-side port flange 400, in fluid communication with the first fluid passage 101 and the first fluid connector 421 of the feed-side port flange 400. The brine fluid with high pressure partially fills up the relevant channel 1002. Thereby, at major part of the feed fluid that had been accommodated in said channel 1002 is discharged from said channel 1002, with high pressure, into the first fluid passage 401 of the feed-side port flange 400 (via the through hole 2 and the first port orifice 201 at the feed-side). In this way, remaining high pressure of the brine fluid can be recovered.

The drum 1001 rotates further until the same channel 1002 overlaps with the second port orifices 202 of both port plates 200 at the same time. New feed fluid is supplied into the channel 1002 via the second fluid passage 402 of the feed-side port flange 400, thereby ejecting the brine fluid in the channel 1002 with lower pressure towards the second fluid passage 202 of the brine-side port flange 200.

Fig. 3 shows the thrust pad 1 that is used in both port plate arrangements 250 in Fig. 1 in more detail.

The thrust pad 1 has a curved shape, in particular a semilunar or crescent curved shape. The thrust pad 1 comprises the through hole 2 in a reniform shape. The through hole 2 is arranged in between a first end point 3 and a second end point 4 of the thrust pad 1. When the thrust pad 1 is used in the pressure exchanger 1000 as for example shown in Figs. 1 and 2, the through hole 2 may allow fluid to pass from the adjacent port flange 100, 400 (in particular from the adjacent first fluid passage 101, 401) to the first port orifice 201 of the corresponding port plate 200 and vice versa.

Furthermore, the thrust pad 1 comprises an inner curved contour 5 and an outer curved contour 6, together defining the curved shape of the thrust pad 1. The inner curved contour 5 and the outer curved contour 6 extend between a first tip portion 7 and a second tip portion 8. In addition, the inner curved contour 5 and the outer curved contour 6 respectively converge at the first end point 3 and the second end point 4 of the respective tip portions 7 and 8.

The tip portions 7 and 8 project axially at a plate-side surface 9 of the thrust pad 1. In addition, a rim 10 surrounding the through hole 2 projects axially at the plate-side surface 9.

A flange-side surface 11 of the thrust pad 1 is provided opposite to the plate-side surface 9. As can be noticed from Figs. 3 to 5, the flange-side surface 11 of thrust pad 1 can be flat.

Further, a lateral surface 12 of the thrust pad 1 extends between the plate-side surface 9 and the flange-side surface 11. The lateral surface 12 can have a chamfered and/or rounded edge. In this example, the edge of the lateral surface 12 circumventing the flange-side-surface is tapered / rounded.

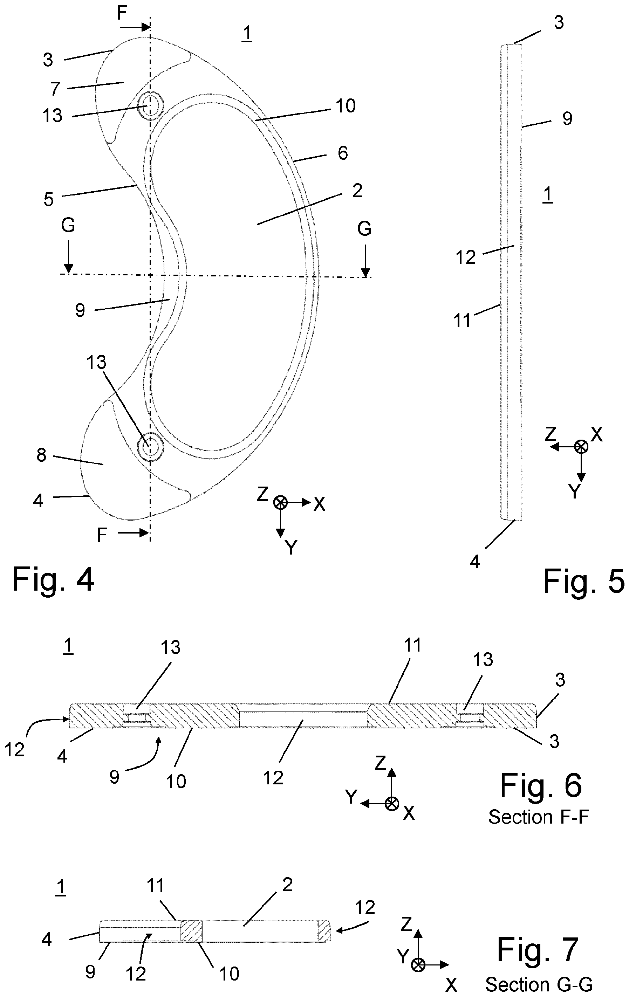

In Figs. 4 to 7, a first direction X, a second direction Y, and a thickness direction Z are shown. Each direction X, Y and Z is orthogonal with respect to the other directions. Further, the lateral surface 12 extends at least partially along the thickness direction Z. Here, the first direction X and the second direction Y are defined as Cartesian coordinates.

As a further example, a radial direction with respect to the rotational axis ZZZ could be referred to instead of the X direction and a circumferential direction could be referred to instead of the Y direction.

The thrust pad 1 includes a blind hole, thereby forming a receptacle 13 for a resilient element 14.

To be more precise, the thrust pad 1 comprises two receptacles 13, wherein one receptacle 13 is arranged close to the first tip 3, in more detail between the first tip 3 and the through hole 2, and wherein another receptacle 13 is arranged close to a second tip 4, in more detail between the second tip 4 and the through hole 2. Although one may assume that the receptacles 13 may form a clearance hole, i.e. a hole passing from between the flange-side surface 11 and the plate-side surface 9 of the thrust pad 1, this is not the case. Moreover, fluid cannot pass through the receptacles 13 from the flange-side surface 11 to the plate-side surface 9.

Two resilient elements 14 in the form of springs are shown in Figs. 8 to 10. They are arranged at the flange-side surface 11 of the thrust pad 1.

Fig. 4 shows an axial view of the thrust pad 1 of Fig. 3, in more detail an axial view onto the plate-side surface 9. The first direction X points to the right of Fig. 4, the second direction Y points towards the bottom of Fig. 4, and the thickness direction Z points into a plane of Fig. 2. Fig. 4 shows the thrust pad 1 that extends more in the second direction Y than in the first direction X. To put it simple, the thrust pad 1 is longer than it is wide. The extension in the thickness direction Z defines a thickness of the thrust pad 1. As can be seen from Figs. 5 to 7, the thickness is comparatively small compared to the extensions in the first direction X and in the second direction Y. It may be noted that the thickness is at least ten times smaller than the extension of the thrust pad 1 in the first direction X and the second direction Y. In other words, the thrust pad 1 is thinner than long and wide.

In a similar manner, the extension of the through hole 2 in the first direction X and the second direction Y is smaller than the extension of the through hole 2 in the thickness direction Z. Here, the through hole 2 covers more than 60 % of an area of the flange-side surface 11.

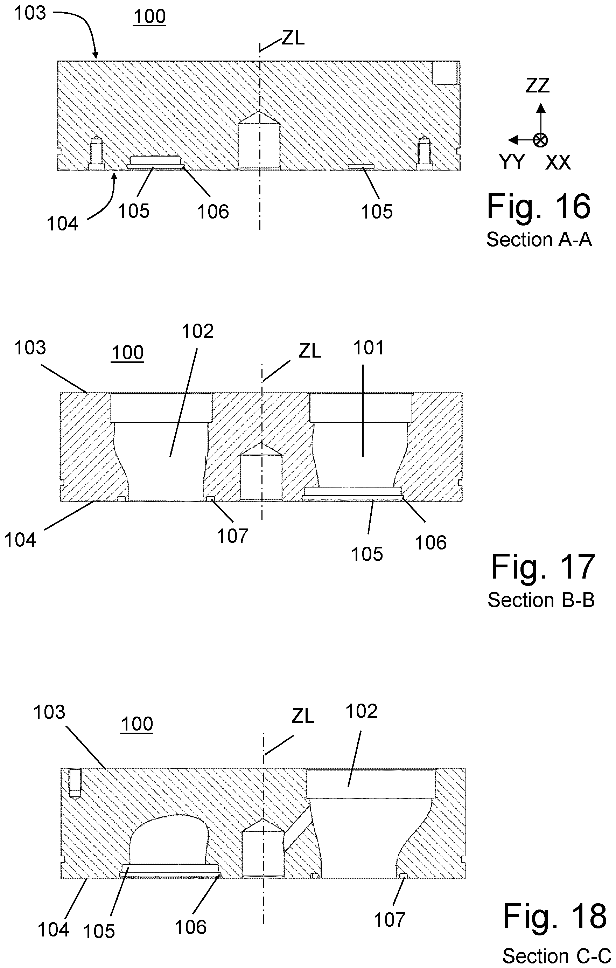

When the thrust pad 1 is used with the pressure exchanger 1000, hydraulic pressure is typically applied to the flange-side surface 11 of the thrust pad 1 and transferred onto the port plate 200 at which the thrust pad 1 is arranged. In this regard, the thrust pad 1 may be a separate part with respect to the port plate 200 as shown in Fig. 17. In general, it is also possible to form the thrust pad integrally with the port plate 200.

The sectional views of sections F-F and G-G depicted in Figs. 6 and 7 may help to better understand the shape of the thrust pad 1 as well as the through hole 2 and the receptacle 13 introduced into the thrust pad 1.

Figs. 8 to 10 show the port plate arrangement 250 with the port plate 200, the thrust pad 1, and the resilient elements 14. The thrust pad 1 is arranged at the flange-side 203 of the port plate 200 around the first port orifice 201.

Furthermore, the port plate 200 includes a groove 205 surrounding an opening of second port orifice 202 at the flange-side 203. Said groove 205 is adapted for mounting (at least partially receiving) a corresponding sealing element (referred to as circumventing sealing element 210) for preventing fluid leakage between the second port orifice 202 and the second fluid passage 102, 402 of the adjacent port flange 100, 400. In this embodiment, said circumventing sealing element 210 is an O-ring for axial sealing (see Fig. 1). Said circumventing sealing element 210 may be considered forming part of the port plate 200 and/or the port plate arrangement 250 although it is not shown in Figs. 8 to 10.

Additionally or alternatively, the port flange 100, 400 may include a circumventing recess 107, e.g. a groove, around an opening of the second fluid passage 102, 402 (as shown in Figs. 1, 18, and 19) at the plate-interface for at least partially receiving the circumventing sealing element 210 (or a further sealing element for preventing fluid leakage between the second port orifice 202 and the second fluid passage 102, 402 of the adjacent port flange 100, 400).

Turning back to Figs. 8 to 10, the port plate 200 includes an opening 206 for receiving the rotary shaft 1004. It also has engagement means 207, e.g. in the form of recesses for pins, for fixing the port plate 200 rotationally with respect to the adjacent port flange 100, 400.

The drum-side 204 of the port plate 200 can include a rim 208 around the first port orifice 201 and/or a rim 209 around the second port orifice 202. This reduces a total size of contact portions for sliding contact with the adjacent axial end of the drum 1001 (see Figs. 1 and 9).

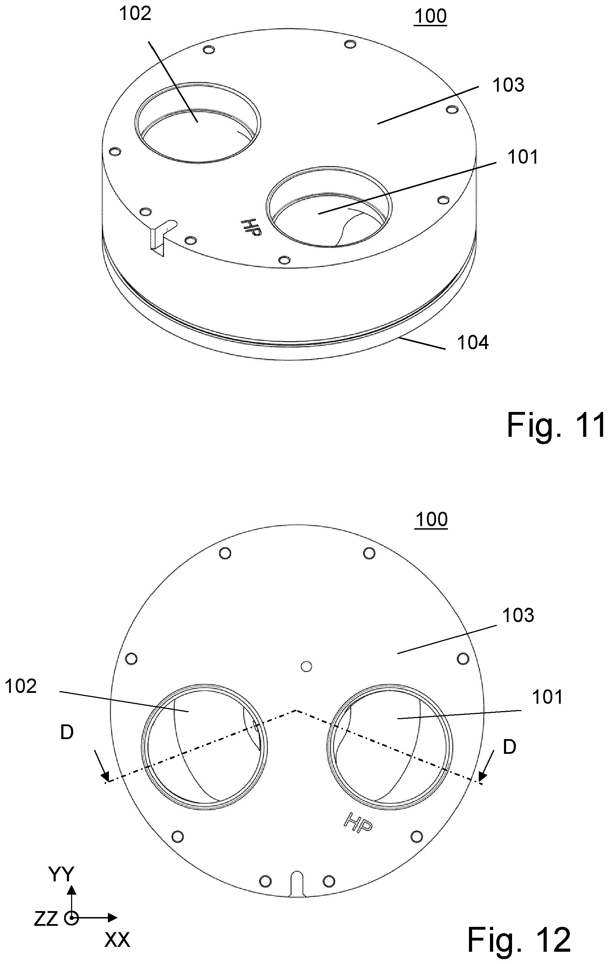

The port flange 100 with which the thrust pad 1 may be used in Fig. 1 is shown in Figs. 11 to 20 in more detail. It is noted that the same type of thrust pad 1 is used with the port flange 400 as well.

The port flange 100 comprises the first fluid passage 101, which may be the high-pressure fluid passage, i.e. a fluid passage through which fluid flows at high pressure. The high-pressure fluid passage is marked with the letters "HP".

Further, the port flange 100 comprises the second fluid passage 102, which may be the low-pressure fluid passage.

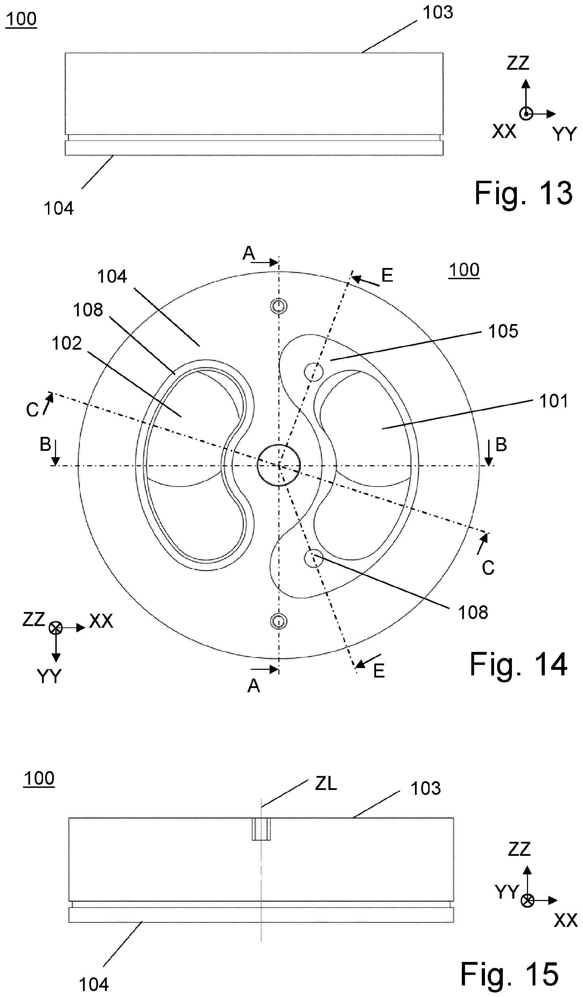

As can be noticed from a comparison of the axial views shown in Figs. 12 and 14, the fluid passages 101 and 102 comprise different shapes on an outer side 103 compared to the shapes on the inner side 104. On the outer side 103 (facing away from the drum 1001 in the axial direction), both fluid passages 101 and 102 comprise a circular shape (see Fig. 12). On the flange-interface, both fluid passages 101 and 102 comprise a reniform shape (see Fig. 14). When the port flange 100 forms part of the pressure exchanger 1000, the first fluid passage 101 forms part of the high-pressure side HS, wherein the second fluid passage 102 forms part of the low-pressure side LS of the pressure exchanger 1000. Optionally, the outer side 103 can be equipped with the corresponding fluid connectors 121, 122.

The inner side 104, which is the side of the port flange 100 opposite to the outer side 103 (in the axial direction), is configured to receive a flange-side portion of the thrust pad 1, for example, in a thrust-pad recess 105 as shown in Fig. 14.

In principle, the port flange 100 comprises a cylindrical shape, with a substantially circular outer side 103 and inner side 104. The port flange 100 extends along a longitudinal axis ZL between the inner side 104 defining the flange-interface and the outer side 103. The longitudinal axis ZL, depicted in Figs. 15 and 16, runs parallel to a longitudinal direction ZZ. A first transverse direction XX and a second transverse direction YY, which are indicated in the Figs. 13 to 16, define directions which are (at least locally) orthogonal to one another and orthogonal to the longitudinal direction ZZ. Showing the directions XX, YY and ZZ may help to better understand the orientation of the port flange 100 in the specific figures. When the port plate assembly 250 of Figs. 8 to 10 is arranged at the port flange 100, the directions XX, YY, and ZZ indicated regarding the port flange 100 may correspond to the directions X, Y, and Z indicated regarding the thrust pad 1 and the port plate arrangement 250, respectively.

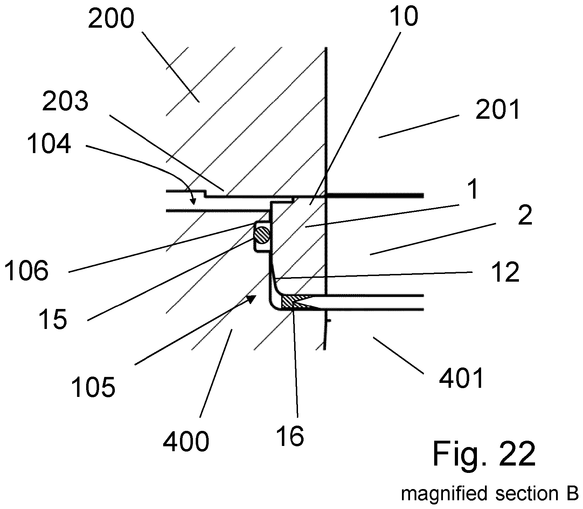

The thrust-pad recess 105 depicted on the inner side 104 of the port flange 100 is configured to receive the flange-side portion of the thrust pad 1, for example the thrust pad 1 of Figs. 3 to 7. The flange-side portion of the thrust pad 1 may then abut laterally on the thrust-pad recess 105, maybe at least partially via a lateral sealing element 15 (compare with Fig. 22). Additionally or alternatively, the flange-side portion of the thrust pad 1 may then abut axially on the thrust-pad recess 105, maybe via an axially sealing element 16 (compare with Fig. 22) and/or via the resilient elements 14. The abutment/engagement between the flange-side portion of the thrust pad 1 with the thrust-pad recess 105 may allow for limited axial movement of the thrust pad 1 relative to the port flange 100.

As can, for example, be noted from Fig. 1, the thrust pad 1 may be arranged between the port plate 200 and the inner side 104 (more specifically the plate-interface) of the adjacent port flange 100.

As can be noticed, for example from Fig. 17, the thrust-pad recess 105 comprises a circumferential groove 106, which extends orthogonal to the longitudinal axis ZL. The circumferential 106 extends inside a side wall (a circumferential surface) of the thrust-pad recess 105. Therefore, in the axial view of the port flange 100 as shown in Fig. 14, the circumferential groove 106 of the thrust-pad recess 105 is not visible. The circumferential groove 106 is configured to receive the lateral sealing element 15 (compare with Fig. 22). The lateral sealing element 15 may for example be an O-ring. When the flange-side portion of the thrust pad 1 is received in the thrust-pad recess 105, the lateral surface 12 of the thrust pad 1 may abut the lateral sealing element 15 that is (partially) received inside the circumferential groove 106.

Further, the thrust-pad recess 105 may include receptacles 108 for receiving the resilient elements 14 (see Fig. 14), in particular end portions thereof that face away from the adjacent thrust pad 1.

Another recess which is referred to as circumventing recess 107 can be seen in the axial view of Fig. 14. The circumventing recess 107 surrounds the second port orifice 102 on the inner side 104 of the port flange 100. The circumventing recess 107 may (partially) receive the circumventing sealing element 210 (not shown in Fig. 9 but in Fig. 17). The circumventing sealing element 210 may be an O-ring. When the O-ring is introduced into the circumventing recess 107, the O-ring may take on a different shape, for example a reniform shape. The circumventing sealing element 210 may seal the port flange 100 against the port plate 200 on the low-pressure side LS.

The sectional views of sections A-A, B-B, C-C, D-D, and E-E depicted in Figs. 16 to 20 may help to better understand the structure of the port flange 100. The section lines are shown in Figs. 12 and 14. In addition, it can be noted from the figures of the port flange 100, especially from the sectional views, that the port flange 100 comprises various drillings, coupling means etc. which are not discussed further.

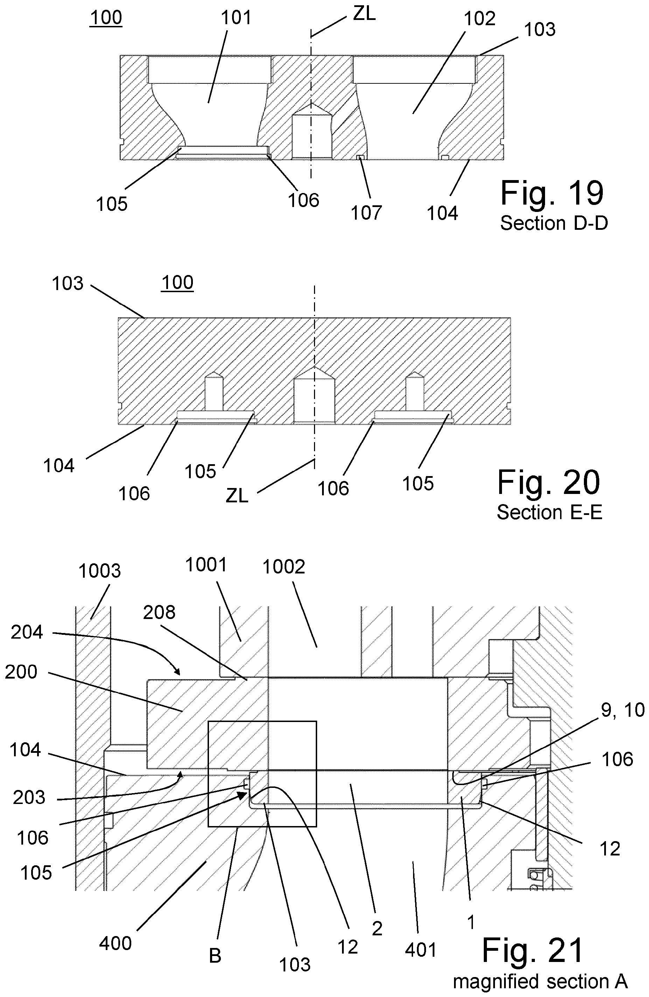

Fig. 21 shows in more detail an interface between one of the axial ends of the drum 1001 with the port flange 400 via the port plate 200 with the thrust pad 1. Fig. 22 is a magnification of the section B in Fig. 21.

It is noted that the interface between the other axial end of the drum 1001 with the port flange 100 is of the same structure.

When the pressure exchanger 1000 is in use, the drum 1001 is rotating about the rotational axis ZZZ. The channels 1002, which extend parallel to the rotational axis ZZZ, may then be filled with fluid at low pressure from the low-pressure side LS or with fluid at high pressure from the high-pressure side HS depending on the rotational position of the drum 1001.

The drum-side 204 of port plate 200 is in abutment with adjacent axial end of the drum 1001, thereby forming a sliding seal between the two components. However, the port plates 200 are not rotating and are rotationally constrained with respect to the housing of the pressure exchanger 1000. Still, the port plates 200 are axially moveable along the rotational axis ZZZ to a limited extent with respect to the respective adjacent port flange 100, 400. The inner side 104 of the port flange 100 comprises the thrust-pad recess 105 with the thrust pad 1. Similarly, the inner side 104 of the port flange 400 comprises the thrust-pad recess 105 to receive the further thrust pad 1. The thrust pads 1 may transfer forces, for example axial forces provided by hydraulic pressure, onto the port plates 200.

When fluid comprising low pressure is introduced in one of the channels 1002, which may be considered as working cylinders, the circumventing sealing element 210 seals the port flanges 100 and 400 against the adjacent port plates 200 and sliding seals between the port plates 200 and the drum 1001 seal the port plates 200 against the drum 1001.

The drum 1001, which is rotating, or to be more precise, the channel 1002, which is rotating as part of the drum 1001, is filled with fluid comprising low pressure from the low-pressure side LS. Due to rotation of the drum 1001, the channel 1002 comprising the new fluid at low pressure may eventually reach the high-pressure side HS. Here, the new fluid is pushed out of the channel 1002 in the opposite direction as it was previously introduced.

Consequently, the thrust pad 1 allows to provide a fluid system with the aforementioned advantages which limits excessive leakage. In addition, the port plate arrangement 250, an assembly of the port plate arrangement 250 with the adjacent port flange 100, 400 as well as the pressure exchanger 1000 contribute to a fluid system with the aforementioned advantages.

### List of reference signs

- 1: Thrust pad
- 2: Through hole
- 3: First end point
- 4: Second end point
- 5: Inner curved contour
- 6: Outer curved contour
- 7: First tip portion
- 8: Second tip portion
- 9: plate-side surface
- 10: Rim
- 11: flange-side surface
- 12: Lateral surface
- 13: Receptacle
- 14: Resilient element
- 15: Lateral sealing element
- 16: Axial sealing element
- 100, 400: Port flange
- 101, 401: First fluid passage
- 102, 402: Second fluid passage
- 103: Outer side
- 104: Inner side
- 105: Thrust-pad recess
- 106: Circumferential groove
- 107: Circumventing recess
- 108: receptacle
- 121, 421: First fluid connector
- 122, 422: Second fluid connector
- 200: Port plate
- 201: First port orifice
- 202: Second port orifice
- 203: flange-side
- 204: plate-side
- 205: groove
- 206: opening
- 207: engagement means
- 208, 209: rim
- 210: circumventing sealing element
- 250: port plate arrangement
- 1000: Pressure exchanger
- 1001: Drum
- 1002: Channel
- 1003: Circumferential housing part
- 1004: Rotary shaft
- 1005: Securing ring
- X: First direction
- Y: Second direction
- Z: Third direction
- XX: First transverse direction
- YY: Second transverse direction
- ZZ: Longitudinal direction
- ZL: Longitudinal axis
- ZZZ: Rotational axis
- LS: Low-pressure side
- HS: High-pressure side

## Claims

1. Thrust pad (1) for a port plate (200) configured to be used with a pressure exchanger (1000), for example a pressure exchanger for a sea water reverse osmosis plant, wherein the pressure exchanger (1000) includes a rotatable drum (1001), said port plate (200) and a port flange (100; 400), wherein the port plate (200) has at least a first port orifice (201) and the port flange (100; 400) has at least a first fluid passage (101; 401),
wherein the thrust pad (1) comprises a plate-side surface (9), a flange-side surface (11), and a lateral surface (12),
wherein the thrust pad (1) comprises a curved shape configured to be arranged at least partially between the port plate (200) and the port flange (100; 400) of the pressure exchanger (1000),
wherein the thrust pad (1) extends in a first direction (X), a second direction (Y), and a thickness direction (Z), wherein the second direction (Y) is defined orthogonal with respect to said first direction (X) and the thickness direction (Z) is defined orthogonal with respect to said first direction (X) and said second direction (Y),
wherein the thrust pad (1) extends in the thickness direction (Z) less than in the first direction (X) and the second direction (Y), wherein the thrust pad (1) extends in the first direction (X) less than in the second direction (Y),
wherein the thrust pad (1) comprises a through hole (2), and
wherein the through hole (2) is configured to fluidically connect the first port orifice (201) of the port plate (200) to the first fluid passage (101; 401) of the port flange (100; 400).

2. Thrust pad (1) according to claim 1, wherein the lateral surface (12) is provided by an inner curved contour (5) and an outer curved contour (6) extending between a first tip portion (7) and a second tip portion (8), and wherein the inner curved contour (5) and the outer curved contour (6) respectively converge at a first end point (3) and a second end point (4) of the respective tip portions (7, 8), and/or wherein the thrust pad (1) comprises a semilunar shape.

3. Thrust pad (1) according to any one of the preceding claims, wherein the through hole (2) extends partially along the curved shape or the semilunar, curved shape of the thrust pad (1), and wherein the through hole (2) comprises a smaller extension in the first direction (X) than in the second direction (Y).

4. Thrust pad (1) according to any one of the preceding claims, wherein the through hole (2) comprises a reniform shape.

5. Thrust pad (1) according to any one of the preceding claims, wherein the thrust pad (1) comprises at least one resilient element (14) which is arranged at the flange-surface (11) of the thrust pad (1) and configured to be compressed along the thickness direction (Z), and wherein the at least one resilient element (14) is configured to abut against the port flange (100; 400) when the thrust pad (1) is arranged between the port flange (100; 400) and the port plate (200).

6. Thrust pad (1) according to any one of the preceding claims, wherein the thrust pad (1) comprises a thickness defined by an extension of the thrust pad (1) along the thickness direction (Z), wherein the thickness is at least 10 times smaller than the extension of the thrust pad (1) in the first direction (X) and/or the second direction (Y), and wherein, for example, the thrust pad (1) comprises a thickness of less than 10 mm.

7. Thrust pad (1) according to any one of the preceding claims, wherein the thrust pad (1) is provided by a composite material comprising polyether ether ketone.

8. Port plate arrangement (250) for the pressure exchanger (1000), for example a pressure exchanger for a sea water reverse osmosis plant, wherein the pressure exchanger (1000) includes a rotatable drum (1001) and a port flange (100; 400), wherein said port flange (100; 400) has at least a first fluid passage (101; 401),
wherein the port plate arrangement (250) has a port plate (200) that extends along a longitudinal axis (ZL) between a flange-side (203) of the port plate (200) and a drum-side (204) of the port plate (200) opposite to said flange-side (203),
wherein the port plate (200) further comprises a first port orifice (201) and a second port orifice (202) extending between the flange-side (203) and the drum-side (204) of the port plate (200),
wherein the ports orifices (201, 202) allow separate fluid flow from the flange-side (203) to the drum-side (204) of the port plate (200),
wherein the port plate (200) comprises the thrust pad (1) according to any one of claims 1 to 7.

9. Port plate arrangement (250) according to claim 8, wherein the thrust pad (1) is configured such that the through hole (2) of the thrust pad (1) forms part of the first port orifice (201).

10. Port plate arrangement (250) according to claim 8 or 9, wherein the port plate (200) comprises polyether ether ketone, preferably the port plate (200) is made of PEEK CA30.

11. Assembly of the port plate arrangement (250) according to any one of claims 8 to 10 and an adjacent port flange (100; 400),
wherein the port flange (100; 400) includes:
a plate-interface for facing the flange-side (203) of the port plate (200) with the thrust pad (1),
the first fluid passage (101; 401), wherein the first fluid passage (101; 401) opens towards the port plate (200) at the plate-interface,
a thrust-pad recess (105) surrounding the first fluid passage (101; 401) at the plate-interface;
wherein the flange-side (203) of the port plate (200) with the thrust pad (1) faces the plate-interface of the port flange (100; 400), wherein a flange-side portion the thrust pad (1) is received in the thrust-pad recess (105) of the port flange (100; 400).

12. Assembly according to claim 11, wherein the assembly includes a lateral sealing element (15) for lateral sealing between the flange-side portion of the thrust pad (1) and the thrust-pad recess (105), and wherein the thrust-pad recess (105) and/or the flange-side portion of the thrust pad (1) includes a circumferential recess (106) for receiving the lateral sealing element (15).

13. Assembly according to claim 11 or 12, wherein the assembly includes an axial sealing element (16) for axial sealing between the flange-side portion of the thrust pad (1) and the thrust-pad recess (105), wherein the axial sealing element (16) is at least axially resilient.

14. Pressure exchanger (1000) extending along a rotational axis (ZZZ) and comprising two assemblies according to any one of claims 11 to 13 and a drum (1001) with channels (1002),
wherein the assemblies are arranged in opposite orientation,
wherein the drum (1001) is arranged between the two assemblies and on the respective drum-sides (104) of the port plates (204),
wherein the rotational axis (ZZZ) runs parallel to the longitudinal axes (ZL) of the port plates (200),
wherein the channels (1002) of the drum (1001) extend parallel to the rotational axis (ZZZ),
wherein the drum (1001) is rotatable about the rotational axis (ZZZ) relative to the port plates (200), and
wherein the channels (1002) are configured to be fluidically connected to the fluid passages (101, 102; 401, 402) of the port flanges (100; 400) via the port orifices (201; 202) of the port plates (200) depending on rotational positions of the drum (1001).

15. Pressure exchanger (1000) according to claim 14, wherein the pressure exchanger (1000) comprises a high-pressure side (HS) and a low-pressure (LS), and wherein the pressure exchanger (1000) is configured to allow fluid comprising a high pressure to pass from one of the port flanges (100; 400) through the through hole (2) of the thrust pad (1), through the first port (201) of the port plate (200) and into one of the channels (1002) of the drum (1001).
